# EUROPÄISCHE PATENTANMELDUNG

(11) **EP 4 310 371 A1**
(43) Veröffentlichungstag der Anmeldung: **24.01.2024**
(21) Anmeldenummer: 23182422.8
(22) Anmeldetag: 29.06.2023
(51) Int. Cl.: F16K 1/30, F17C 13/04, F16K 1/04, F16K 27/02, F16B 21/18

(54) **ARMATUR MIT VENTILELEMENT**

(30) Priorität: 20.07.2022 DE 102022118129
(71) Anmelder: Oventrop GmbH & Co. KG, 59939 Olsberg (DE)
(72) Erfinder: Spiekermann, Ralf, 59939 Olsberg (DE)
(74) Vertreter: Köchling, Conrad-Joachim

(57) **Zusammenfassung**

Die Erfindung betrifft eine Armatur (1) mit einem Gehäuse mit Ventilelement (3) zum Einstellen eines Fluiddurchflusses und mit einem Sicherungsring (2) gegen unbeabsichtigtes Herausdrehen des Ventilelementes (3), wobei das Gehäuse der Armatur (1) einen gestuften Montagekanal aufweist, der einen ersten Bereich größeren Durchmessers als das Ventilelement (3) aufweist und an diesen stufig anschließend einen zweiten Bereich kleineren Durchmessers aufweist, in den das Ventilelement (3) einbringbar ist, und wobei der Sicherungsring (2) in einer Nut (9) des Montagekanals positioniert ist, in der mindestens ein Teil des Sicherungsringes (2) radial in den ersten Bereich des Montagekanals vorragt, wobei der Sicherungsring (2) mit dem Ventilelement (3) ein einstückiges Bauteil (4) bildet und die Verbindungsstelle zwischen beiden eine Sollbruchstelle ist, wobei beim Einbringen des Ventilelementes (3) in den Montagekanal des Gehäuses der Armatur (1) das Abtrennen des Sicherungsringes (2) erfolgt.

## Beschreibung

Die Erfindung betrifft eine Armatur oder einen Anschlussstutzen mit einem Gehäuse mit einem Ventilelement zum Einstellen und/ oder Absperren eines Fluiddurchflusses, insbesondere für einen angeschlossenen Speicherbehälter, und mit einem Sicherungsring gegen unbeabsichtigtes Herausdrehen oder Herausziehen des Ventilelementes, wobei das Gehäuse der Armatur einen gestuften Montagekanal aufweist, der einen ersten Bereich größeren Durchmessers als das Ventilelement aufweist und an diesen stufig anschließend einen zweiten Bereich kleineren Durchmessers aufweist, in den das Ventilelement mit einem Einschraubgewinde einschraubbar ist oder mit dem Schaft eines Ventilkolbens einschiebbar ist, und wobei der Sicherungsring in einer innenliegenden Nut des im Durchmesser größeren Bereichs des Montagekanals in einer Solllage positionierbar ist, in der mindestens ein Teil des Sicherungsringes soweit radial in den ersten Bereich des Montagekanals vorragt, dass eine Sperre für die Demontage des Ventilelementes gebildet ist.

Aus der EP 2176554 B1 ist eine Sicherheitseinrichtung für Druckmedien einschließende Behälter bekannt. Hierbei ist auch ein Sicherungsring beschrieben, der dort als Blockierelement bezeichnet ist, und der die Wegstrecke einer Verschlussschraube in einem Strömungsweg eines Hydrospeichers begrenzt. Das Blockierelement bildet dabei einen Anschlag für den Kopf der Verschlussschraube. Bei dieser bekannten Lösung ist der Sicherungsring ein separates Teil, welches montiert und eingesetzt werden muss, nachdem die Verschlussschraube in dem Strömungsweg des Hydrospeichers positioniert und festgelegt ist. Der Sicherungsring bildet dann eine Sperre, sodass die Verschlussschraube nicht entnommen und entfernt werden kann, weil der Sicherungsring als Anschlag für die Verschlussschraube dient und eine Blockade in dem Installationskanal der Armatur bildet.

Aus dem deutschen Gebrauchsmuster DE 20220837 U1 ist eine Rohrverschraubung bekannt, die dazu dient, ein Rohr mit einem Anschlussstutzen zu verbinden. Bei dieser dort beschriebenen Lösung ist ein Sicherungsring vorgesehen, der zunächst einteilig mit einem Halteelement ausgebildet ist. Erst bei der Montage durch ein Schraubelement, beispielsweise eine Überwurfmutter, wird der Sicherungsring von dem Halteelement abgeschert. Der Sicherungsring ist hierbei durch einen Klemmring gebildet, der nach dem Abscheren durch radiale Kräfte, die ebenfalls durch das Schraubelement erzeugt werden, auf einem Rohr geklemmt und fixiert wird. Zugkräfte, die auf das Rohr wirken und dieses aus der Verschraubung ziehen könnten, werden durch den am Schraubelement anliegenden Klemmring verhindert.

Nachteilig bei den bekannten Sicherungsringen ist zum einen, dass für die Vereinzelung des Sicherheitsringes ein separater Montagevorgang erforderlich ist, der meist durch einen zusätzlich einzurichtenden Montageautomaten durchgeführt werden muss und der häufig durch Störungen unterbrochen wird, wobei nach der Vereinzelung neben einem zu montierenden und gegen Herausdrehen abzusichernden Ventilelement der Sicherungsring ebenfalls durch einen separaten Montagevorgang an seine Endposition in der Armatur oder deren Anschlussstutzen gebracht werden muss, wobei dann, wenn der Sicherungsring als Klemmring auf einem Bauteil wie zum Beispiel einem Rohr ausgeführt ist, das Bauteil relativ zum Sicherungsring, zum Beispiel für das Absperren oder Einstellen eines Fluidstromes, nicht bewegbar ist.

Ausgehend von diesem Stand der Technik liegt der Erfindung die Aufgabe zu Grunde, einen Sicherungsring gegen unbeabsichtigtes Herausdrehen oder Herausziehen eines Ventilelementes, wie zum Beispiel einer Ventilspindel oder eines Ventilkolbens, aus einer fluidführenden Armatur oder einem Anschlussstutzen eines Speicherbehälters zu schaffen, der trotz Anordnung noch eine Drehung des Ventilelementes zum Absperren oder Einstellen eines Fluidstromes ermöglicht, wobei die entsprechend ausgestattete Armatur kostengünstig herzustellen ist und eine vereinfachte Montage ermöglicht.

Zur Lösung dieser Aufgabe schlägt die Erfindung vor, dass der Sicherungsring mit dem Ventilelementes ein einstückiges Bauteil bildet und radial über das Ventilelement vorragt, wobei die Verbindungsstelle zwischen Sicherungsring und Ventilelement durch eine Sollbruchstelle gebildet ist, der Sicherungsring eine Anschlagfläche aufweist, die angeordnet ist, um beim Einschieben oder Einschrauben des Ventilelementes in den Montagekanal des Gehäuses der Armatur an einen Gegenanschlag des Montagekanals zur Anlage zu kommen und bei weiterem Einschieben oder Einschrauben des Ventilelementes zum Abtrennen des Sicherungsringes führt.

Hierdurch wird unteranderem erreicht, dass der Sicherungsring nicht als separates Bauteil hergestellt, gelagert werden, vor der Montage gehändelt werden und auch nicht montiert werden muss.

Erfindungsgemäß ist der Sicherungsring zunächst an das Ventilelement angeformt, sodass ein einstückiges Einbauteil gebildet ist, was bezüglich der Lagerhaltung, der Lieferung und der Montage besonders vorteilhaft ist. Die Verbindungsstelle zwischen dem Sicherungsring und dem Ventilelement ist durch eine Sollbruchstelle gebildet. Erst bei der Montage des einstückigen Einbauteiles in den entsprechenden Kanal des Armaturengehäuses erfolgt zwangsweise ein Abtrennen des Sicherungsringes vom Ventilelement, weil eine vorragende Fläche des Sicherungsringes beispielsweise an der Stufe des Einbaukanals beim Einbringen des Ventilelementes zunächst zum Anliegen kommt und erst bei weiterem Einbringen des Ventilelementes über einen Schraub- oder Schubvorgang wegen der Sollbruchstelle ein Abtrennen des Sicherungsringes von dem Ventilelement erfolgt. Der Kanal des Gehäuses weist in Montagerichtung des Einbauteiles unmittelbar vor der Stufe des Kanales eine innenliegende Nut auf, in die der Sicherungsring nach dem Abtrennvorgang eingelagert wird. Sofern versucht werden sollte, das Ventilelement anschließend wieder zu demontieren, so blockiert der Sicherungsring den axialen Rückweg des Ventilelementes und verhindert so die Demontage. Die Drehung des Ventilelementes zum Absperren oder Einstellen des Fluidstromes ist aber weiterhin ermöglicht.

Bevorzugt ist dabei vorgesehen, dass die innenliegende Nut unmittelbar vor der Stufe des Montagekanals liegt, die durch den Übergang vom ersten Bereich zum zweiten Bereich des Montagekanals gebildet ist.

Des Weiteren ist bevorzugt vorgesehen, dass der Sicherungsring an einer Stelle einen Schlitz oder radial gerichteten Spalt aufweist.

Des Weiteren ist bevorzugt vorgesehen, dass der abgetrennte Sicherungsring in der Solllage aufgeweitet ist.

Hierdurch wird erreicht, dass der Sicherungsring in der Solllage eine sichere Position einnimmt.

Eine besonders bevorzugte Weiterbildung wird darin gesehen, dass die Montagemündung oder der Eingang des Montagebereichs für das Einbauteil nach dem Einbau des Einbauteils durch einen vorzugsweise eingeschraubten Verschlussstopfen oder -bolzen geschlossen ist, der mit einem vorderseitigen Bestandteil, insbesondere einem Dorn, den separierten Sicherungsring radial aufdehnt und in die Nut drückt.

Um ein Herausfallen des abgetrennten Sicherungsringes aus der Einbausituation, beispielsweise aus der Nut, zu verhindern, wird durch die Montage eines Verschlussstopfens oder -bolzens, der den Montagebereich für das Ventilelement im Gehäuse der Armatur oder dem Anschlussstutzen verschließt, und an den ein zum Sicherungsring hin gerichteter Dorn angeformt ist, der Sicherungsring so aufgedehnt, dass er in die Nut gedrängt wird und diese ausfüllt, sodass bei axial auf den Sicherungsring wirkenden Kräften dieser nicht mehr aus der Nut gedrückt werden kann. Sofern der Verschlussstopfen oder -bolzen entfernt wird und versucht wird, das Ventilelement wieder zu demontieren, so blockiert der Sicherungsring den Montagevorgang, weil er in den Weg des Ventilelementes vorragt und einen Anschlag für das Ventilelement bildet. Ein unbeabsichtigtes Demontieren wird somit verhindert.

Bevorzugt ist weiter vorgesehen, dass die Sollbruchstelle durch Materialschwächung gebildet ist.

Die Materialschwächung wird so eingestellt und ausgebildet, dass mit geringen Montagekräften das Abtrennen des Sicherungsringes vom Ventilelement erreicht werden kann.

Bevorzugt ist dazu vorgesehen, dass die Materialschwächung durch eine Kontur mit keilförmigen Eindrehungen gebildet ist.

Hierdurch wird das Abscheren durch Kerbwirkung unterstützt.

Zudem ist bevorzugt vorgesehen, dass in das einstückige Einbauteil in einem Teilbereich des Sicherungsringes eine Materialausnehmung eingearbeitet ist, die bei abgetrenntem Sicherungsring vom Ventilelement eine Öffnung bildet, um das Aufdehnen des Sicherungsringes in die innenliegende Nut des Gehäuses der Armatur zu ermöglichen.

Dadurch, dass der Sicherungsring eine entsprechende Materialausnehmung aufweist, ist die Ringform nicht mehr geschlossen, sondern offen, sodass nach dem Abtrennen des Sicherungsringes vom Ventilelement ein leichtes Aufdehnen des Sicherungsringes beispielsweise in die innenliegende Nut des Gehäuses der Armatur möglich ist.

Für das Aufspreizen des Sicherungsringes in die innenliegende Nut des Gehäuses der Armatur oder Anschlussstutzens ist vorteilhafterweise vorgesehen, dass das Aufweiten des Sicherungsringes in eine innenliegende Nut des Gehäuses der Armatur oder Abschlussstutzens durch einen am vorderen Ende des Verschlussstopfens oder -bolzen ausgebildeten, zum Sicherungsring ausgerichteten Dorn mit einer außen umlaufenden angedrehten Schräge erfolgt, die mit einer innenliegende Fläche oder Kante, insbesondere Schräge, des Sicherungsringes so korrespondiert, dass der Dorn den Sicherungsring zentriert und eine radiale Kraft auf den Sicherungsring erzeugt, um diesen in die innenliegende Nut zu drücken.

Durch diese Ausbildung wird erreicht, dass der Dorn den Sicherungsring zentriert und eine radiale Kraft auf den Sicherungsring erzeugt, um diesen im gewollten Maß in die innenliegende Nut zu drücken.

Bevorzugt ist zudem vorgesehen, dass das als Ventilspindel ausgeführtes Ventilelement ein Einschraubgewinde aufweist und der Abschervorgang beim Einschrauben des Einbauteiles eingeleitet und vollendet wird.

Das Einschraubgewinde steht mit einem Gewinde im Durchmesser kleineren Bereich des Kanals der Armatur in Eingriff, sodass durch das Einschrauben des Ventilelementes der Abschervorgang eingeleitet und vollendet wird.

Alternativ ist vorgesehen, dass das Ventilelement des Einbauteils als verschiebbarer Ventilkolben ausgeführt ist, wobei beim Einführen eines Verschlussstopfens oder -bolzen in einem ersten Montageschritt das axial eingeführte Einbauteil über die von Gehäuse der Armatur und Sicherungsring gebildete Anschlagfläche hinaus in Axialrichtung weitergeschoben wird und dabei den Sicherungsring vom Ventilkolben des Einbauteils abschert und in einem zweiten Montageschritt beim weiteren Einführen des Verschlussstopfens oder -bolzens den abgescherten Sicherungsring in die vorgesehene Innennut des Gehäuses der Armatur aufdehnt.

In vorteilhafter Weise kann der Abschervorgang auch durch den zum Aufspreizen des Sicherungsringes vorgesehenen Verschlussstopfen oder -bolzen mit übernommen werden, wobei der Bolzen mit einem Außengewinde versehen ist und mit einem Innengewinde des Durchmessers größeren Bereichs des Einschubkanales in Eingriff ist. Beim Einschrauben des Verschlussstopfens oder -bolzens in das Gehäuse wird in einem ersten Schritt das axial eingeführte Einbauteil über die Anschlagfläche des Sicherungsringes hinaus in Axialrichtung weitergeschoben und dabei der Sicherungsring vom Ventilkolben abgeschert. In einem zweiten Schritt wird bei weiterem Einschrauben des Verschlussstopfens oder -bolzens der abgescherte Sicherungsring in die vorgesehene Nut aufgedehnt. Dabei ist bevorzugt vorgesehen, dass der zum Aufspreizen des Sicherungsringes vorgesehene Dorn am Verschlussstopfen oder -bolzen stirnseitig einen zum Ventilkolben hingerichteten Anschlagbereich mit einer zum Ventilkolben korrespondierenden Anschlagfläche für das Verschieben des Ventilkolbens aufweist.

Um sicherzustellen, dass beim Verstellen des Ventilelementes kein unbeabsichtigtes Demontieren des Ventilelementes möglich ist und dieses auf Anschlag gegen den Sicherungsring anläuft, ist es bevorzugt, dass das Ventilelement des Einbauteils als verschiebbarer Ventilkolben ausgeführt ist, wobei beim Einführen eines Verschlussstopfens oder -bolzen in einem ersten Montageschritt das axial eingeführte Einbauteil über die von Gehäuse der Armatur und Sicherungsring gebildete Anschlagfläche hinaus in Axialrichtung weitergeschoben wird und dabei den Sicherungsring vom Ventilkolben des Einbauteils abschert und in einem zweiten Montageschritt beim weiteren Einführen des Verschlussstopfens oder-bolzens den abgescherten Sicherungsring in die vorgesehene Innennut des Gehäuses der Armatur aufdehnt.

Bevorzugt ist zudem vorgesehen, dass der separierte Sicherungsring einen Innendurchmesser bildet, der auch nach dem Aufweiten durch den Dorn des Verschlussstopfens oder -bolzens kleiner ist als der Außendurchmesser des Ventilelements.

Die Erfindung ist nachstehend anhand von zwei Ausführungsbeispielen erläutert und im Folgenden beschrieben.

Es zeigt:
- Figur 1: Eine vereinfachte Skizze eines Anschlussstutzens einer Armatur mit darin verbautem Einbauelement und Verschlussstopfen im Mittellängsschnitt gesehen;
- Figur 2: ein aus Ventilelement und Sicherungsring einstückig gebildetes Einbauelement mit Sollbruchstelle ebenfalls in Mittellängsschnitt gesehen;
- Figur 2b: eine Einzelheit der Figur 2a in 20-facher Vergrößerung;
- Figur 3: das Gehäuse des in Figur 1 gezeigten Anschlussstutzens der Armatur in Mittellängsschnitt gesehen;
- Figur 4: das im Gehäuse des Anschlussstutzens montierte Einbauelement;
- Figur 5a: das in Ventilelement und Sicherungsring durch Abscheren getrennte Einbauelement;
- Figur 5b: die Ausführungsform nach Figur 5a im Schnitt A-A gesehen;
- Figur 6a: die Figur 5a jedoch mit eingeschraubtem Verschlussstopfen, vor dem Aufspreizen des Sicherungsringes;
- Figur 6b: die gleiche Situation nach dem Aufspreizen des Sicherungsringes, Verschlussstopfen bis auf Anschlag zum Gehäuse weitergeschraubt;
- Figur 7: das gegen Demontage gesicherte Ventilelement in einer Position am Anschlag zum Sicherungsring;
- Figur 8: eine Ansicht analog Figur 4 jedoch mit einem Ventilkolben als Ventilelement;
- Figur 9a: den Verschlussbolzen in erster Position: Abscheren des Sicherungsringes;
- Figur 9b: Verschlussbolzen in der zweiten Position: Aufweiten des Sicherungsringes;
- Figur 10: gegen Demontage gesichertes Ventilelement bei der Ausführung mit Ventilkolben am Anschlag zum Sicherungsring;
- Figur 11: ein vereinzelter, abgescherter Sicherungsring in Ansicht.
- Figur 11a: desgleichen in Seitenansicht im Schnitt gesehen.

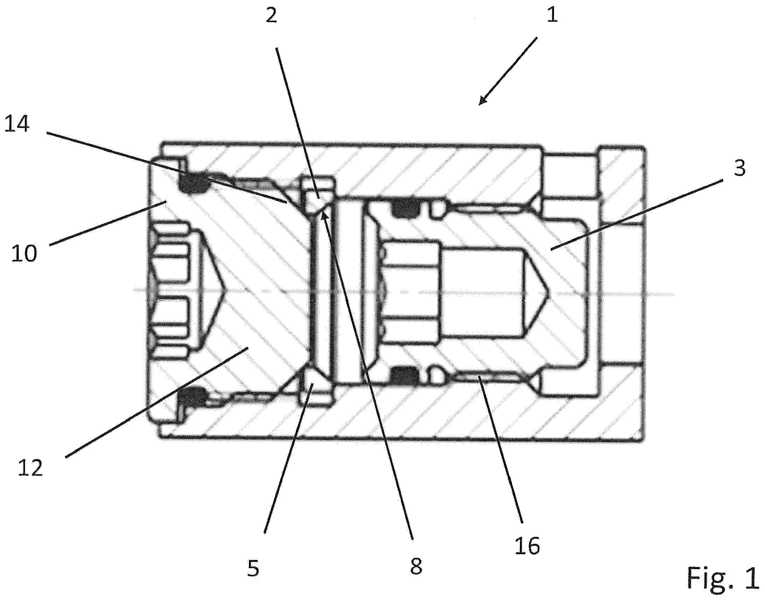

In den Zeichnungsfiguren ist eine Armatur 1 oder ein Anschlussstutzen mit einem Gehäuse gezeigt, in dem ein Ventilelement 3 zum Einstellen und/ oder Absperren eines Fluiddurchflusses, insbesondere für einen angeschlossenen Speicherbehälter, angeordnet ist, und mit einem Sicherungsring 2 gegen unbeabsichtigtes Herausdrehen oder Herausziehen des Ventilelementes 3 gezeigt ist. In Figur 1 rechts am Ende sind axial mittig und oben seitlich Durchflussöffnungen gezeigt, wobei das Ventilelement 3 mittig in den so gebildeten Durchflussbereich hineinragt.

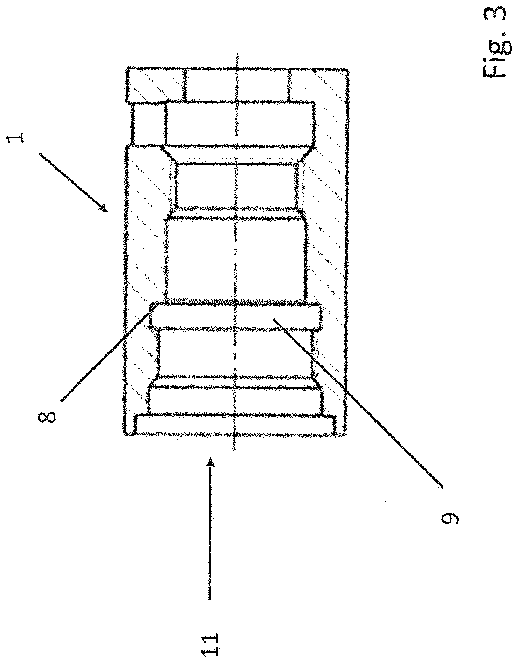

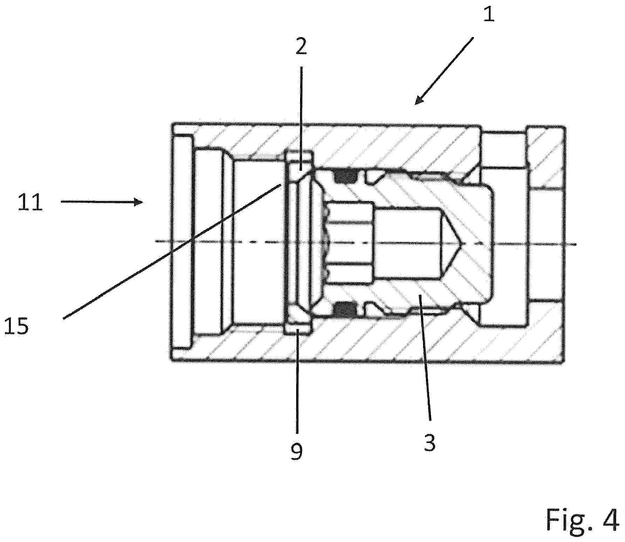

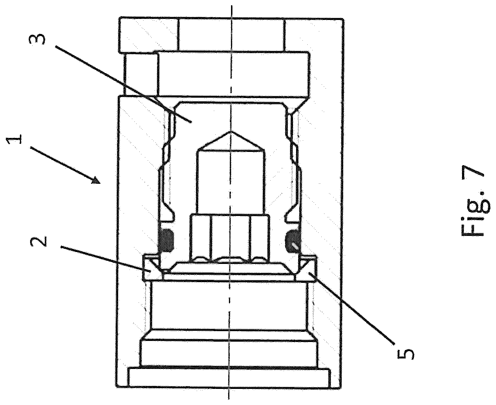

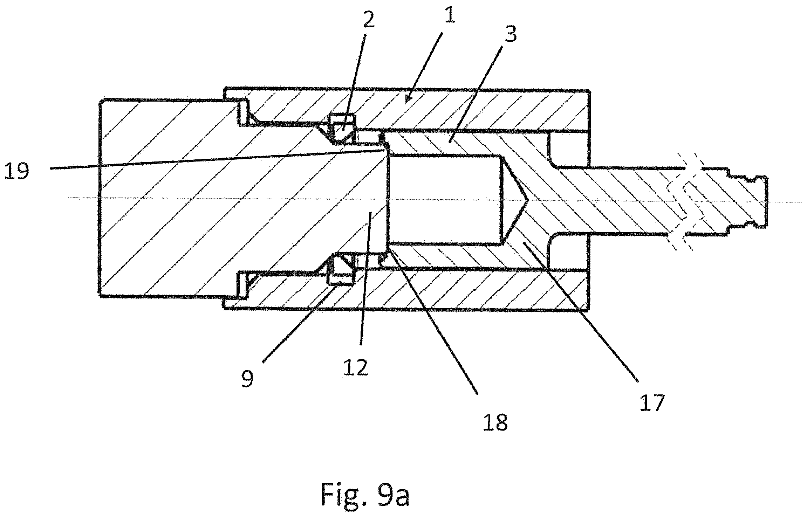

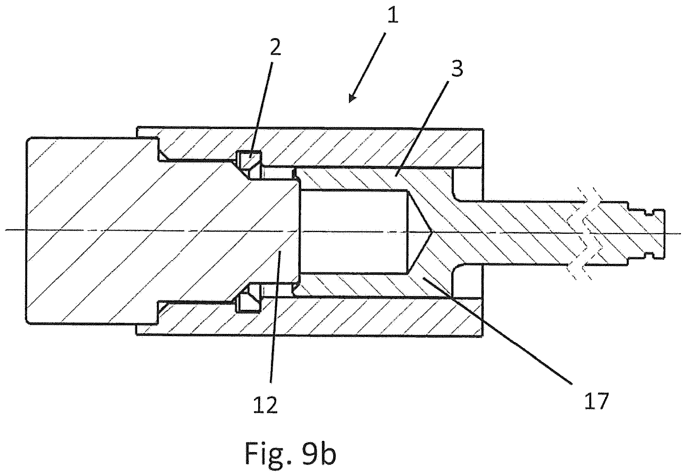

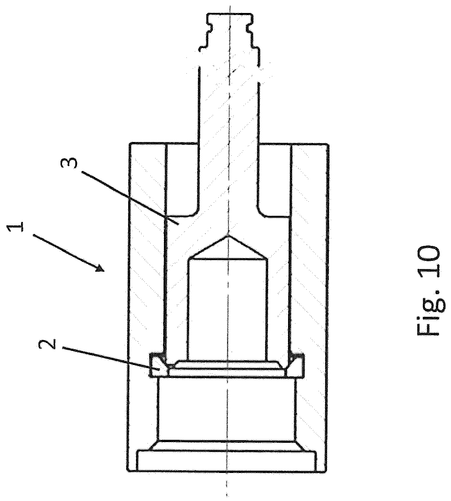

Das Gehäuse der Armatur 1 weist einen gestuften Montagekanal auf, wie beispielsweise besonders gut in Figur 3 ersichtlich ist. Gegenüber der am rechten Ende vorgesehenen Durchflussöffnung ist am linken Ende der Montagebereich 11 für das später noch beschriebene Einbauteil ersichtlich. Dieser Montagekanal weist links einen ersten Bereich mit größerem Durchmesser auf als das Ventilelement 3. An diesen schließt ein zweiter Bereich kleineren Durchmessers an, in den das Ventilelement 3 mit einem Einschraubgewinde 16 einschraubbar ist, wie in Figur 1 beispielsweise gezeigt ist oder in den der Schaft eines Ventilkolbens 17 einschiebbar ist, wie beispielsweise in Figur 9a und 9b gezeigt. Der Sicherungsring 2 ist zum Beispiel in Figur 1 in einer innenliegenden Nut 9 des im Durchmesser größeren Bereichs des Montagekanals in einer Solllage positionierbar, in der zumindest ein Teil des Sicherungsringes 2 soweit radial in den ersten Bereich des Montagekanals vorragt, dass eine Sperre für die Demontage des Ventilelementes 3 gebildet ist. Dies ist beispielsweise gut in Figur 4, Figur 7 und Figur 10 ersichtlich.

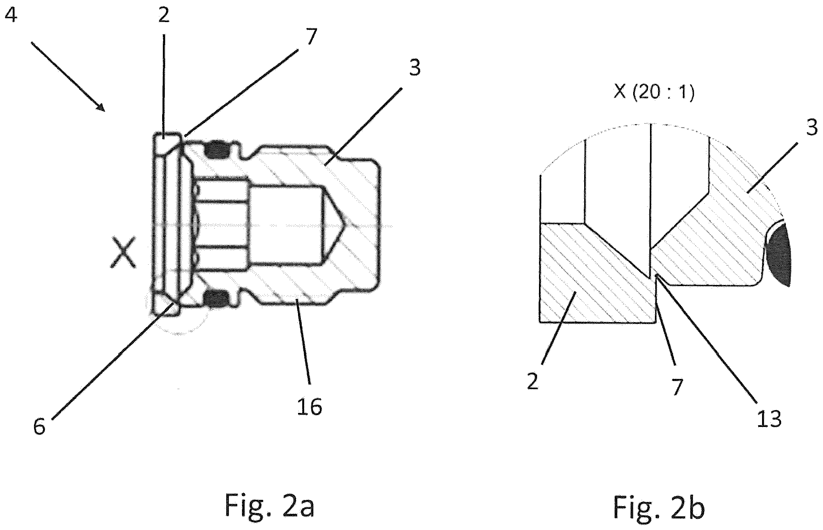

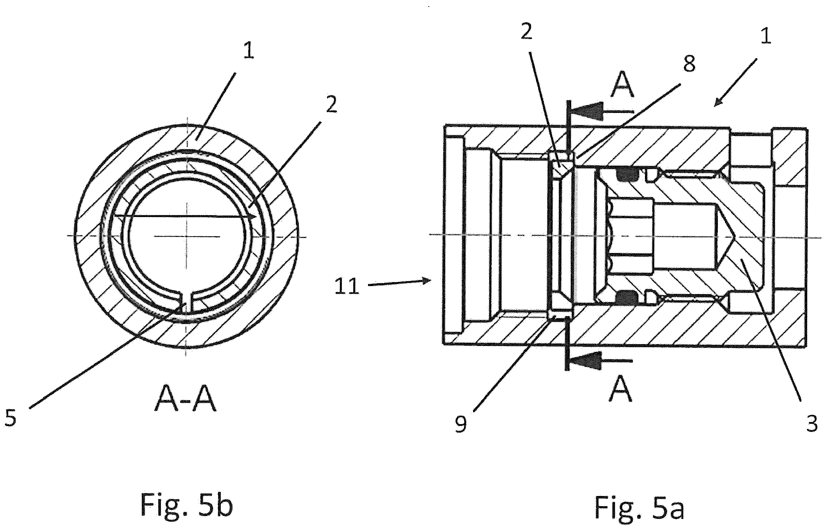

Der Sicherungsring 2 ist zunächst mit dem Ventilelement 3 als einstückiges Bauteil 4 ausgebildet, wie in Figur 2a beispielsweise ersichtlich ist, wobei der Sicherungsring 2 radial über das Ventilelement 3 vorragt. Dies ist gut in Figur 2 ersichtlich, ebenso wie die Tatsache, dass die Verbindungsstelle zwischen Sicherungsring 2 und Ventilelement 3 durch eine Sollbruchstelle 6 gebildet ist. Zudem weist der Sicherungsring 2 eine Anschlagfläche 7 auf, die dazu dient, beim Einschieben oder Einschrauben des Ventilelementes 3 in den Montagekanal des Gehäuses der Armatur 1 an einem Gegenanschlag 8 des Montagekanals des Gehäuses zur Anlage zu kommen und bei weiterem Einschieben oder Einschrauben des Ventilelementes 3 zum Abtrennen des Sicherungsringes 2 führt. Dies ist in Figur 4 und in Figur 5a gezeigt. Wie beispielsweise in Figur 3 gezeigt, liegt die innenliegende Nut 9 unmittelbar vor der Stufe des Montagekanals, die durch den Übergang vom ersten Bereich zum zweiten Bereich des Montagekanals gebildet ist, wobei die Stufe dem Gegenanschlag 8 bildet.

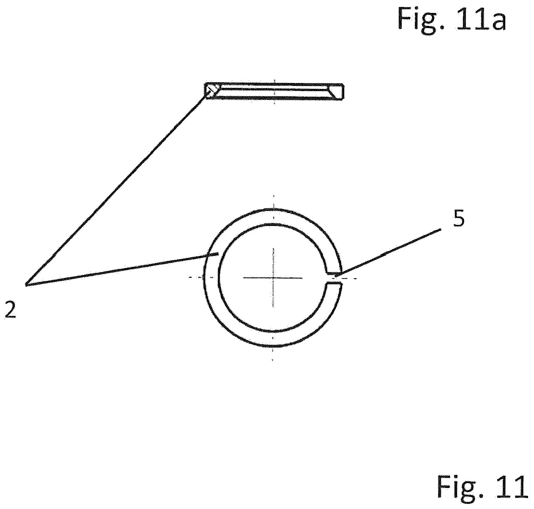

Der Sicherungsring 2 weist, wie beispielsweise in Figur 5b und Figur 11 gezeigt ist, an einer Stelle einen Schlitz oder einen radial gerichteten Spalt 5 auf. Dieser dient dazu, den abgetrennten Sicherungsring 2 in der Solllage aufweiten zu können, sodass er in eine Position verbringbar ist, die bespielweise in Figur 1 gezeigt ist.

Wie beispielweise aus Figur 2a ersichtlich, weist das Ventilelement 3 an seinem in der Zeichnung links befindlichen Ende stirnseitig eine Eingriffskontur für ein Werkzeug auf, mittels dessen das Ventilelement 3 um seine Längsachse gedreht werden kann.

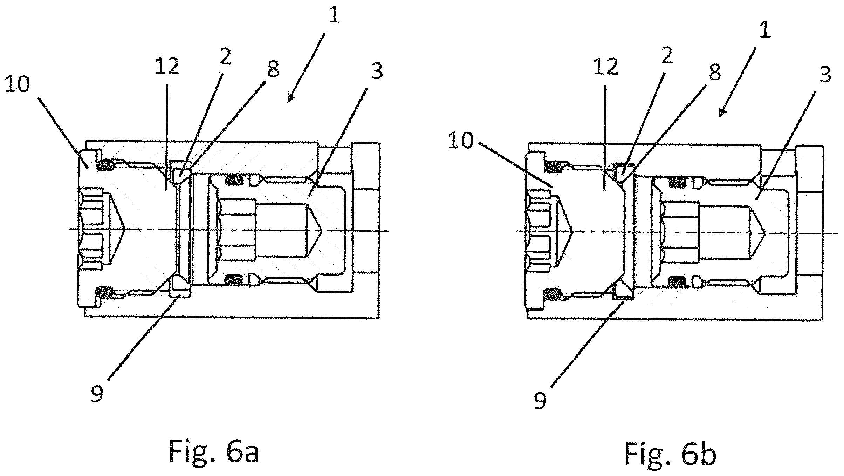

Die Montagemündung oder der Eingang des Montagebereichs 11 für das Einbauteil 4 ist nach dem Einbau des Einbauteils 4 beispielsweise gemäß Figur 1 durch einen eingeschraubten Verschlussstopfen 10 oder -bolzen geschlossen, der mit seinem vorderseitigen Bestandteil (in der Zeichnungsfigur 1 rechts), insbesondere einem Dorn 12 aufweist, der, wie in Figur 6a und Figur 6b ersichtlich, den separierten Sicherungsring 2 radial aufdehnen kann und in die Nut 9 eindrücken kann. Dazu weist auch der Verschlussstopfen 10 in der Zeichnung beispielweise Figur 1 links stirnseitig eine Eingriffskontur für ein Werkzeug auf, mittels dessen der Verschlussstopfen um seine Längsachse gedreht werden kann.

Die Sollbruchstelle 6 ist im Übrigen durch eine Materialschwächung 13 gebildet, die in Figur 2b gezeigt ist. Diese ist durch eine Kontur mit keilförmiger Eindrehung gebildet, wie ebenfalls aus Figur 2b ersichtlich ist.

In das einstückige Bauteil 4 ist in einem Teilbereich des Sicherungsringes 2 eine Materialausnehmung eingearbeitet (Spalt im Bereich des Sicherungsringes), die bei abgetrenntem Sicherungsring 2 vom Ventilelement 3 eine Öffnung bildet, um das Aufdehnen des Sicherungsringes 2 in die innenliegende Nut 9 des Gehäuses der Armatur 1 zu ermöglichen.

Das Aufweiten des Sicherungsringes 2 erfolgt, wie in Figur 6a gezeigt, in die innenliegende Nut 9 des Gehäuses der Armatur 1 oder des Anschlussstutzens durch einen am vorderen Ende des Verschlussstopfens 10 ausgebildeten zum Sicherungsring 2 ausgerichteten Dorn 12 mit einer außen umlaufenden angedrehten Schräge 14, die in Figur 1 gezeigt ist, die mit einer innenliegenden Fläche oder Kante, insbesondere Schräge 15 des Sicherungsringes 2 so korrespondiert, dass der Dorn 12 den Sicherungsring 2 zentriert und eine radiale Kraft auf den Sicherungsring 2 erzeugt, um diesen in die innenliegenden Nut 9 zu drücken. In den Zeichnungsfiguren 1 bis 7 ist das Ventilelement 3 als Ventilspindel ausgeführt, die ein Einschraubgewinde 16 aufweist, wobei der Abschervorgang zwischen Sicherungsring 2 und Ventilelement 3 beim Einschrauben des kompletten Einbauteiles 4 eingeleitet und bei Auftreffen auf den Gegenanschlag 8 im Gehäuse des Anschlussstutzens vollendet wird.

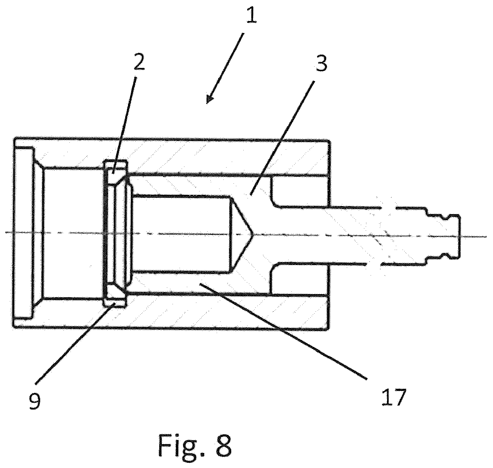

Bei der Ausführungsform nach Figur 8 bis 10 ist das Ventilelement 3 des Einbauteils 4 als verschiebbarer Ventilkolben 17 ausgeführt, wobei beim Einführen eines Verschlussstopfens 10 oder -bolzens in einem ersten Montageschritt das axial eingeführte Einbauteil 4 über die vom Gehäuse der Armatur 1 und den Sicherungsring 2 gebildete Anschlagfläche 8 hinaus in axialer Richtung weitergeschoben wird und dabei den Sicherungsring 2 vom Ventilkolben 17 des Einbauteils 4 abschert und in einem zweiten Montageschritt bei weiterem Einführen des Verschlussstopfens 10 oder -bolzens den abgescherten Sicherungsring in die vorgesehene Innennut 9 des Gehäuses der Armatur 1 aufdehnt.

Der separierte Sicherungsring 2 bildet einen Innendurchmesser, der auch nach dem Aufweiten durch den Dorn 12 des Verschlussstopfens 10 oder -bolzens kleiner ist, als der Außendurchmesser des Ventilelementes 3.

Die Erfindung ist nicht auf die Ausführungsbeispiele beschränkt, sondern im Rahmen der Offenbarung vielfach variable.

Alle neuen in der Beschreibung und/oder Zeichnung offenbarten Einzel- und kombinationsmerkmale werden als erfindungswesentlich angesehen.

### Bezugszeichenliste:

- 1: Armatur, Anschlussstutzen
- 2: Sicherungsring
- 3: Ventilelement
- 4: Einstückiges Einbauteil
- 5: Spalt im Bereich des Sicherungsringes
- 6: Sollbruchstelle
- 7: Anschlagfläche am Sicherungsring 2
- 8: Gegenanschlag im Gehäuse des Anschlussstutzens
- 9: Innenliegende Nut im Gehäuse
- 10: Verschlussstopfen, Verschlussbolzen
- 11: Montagebereich für einstückiges Einbauteil
- 12: Dorn am Verschlussstopfen 10
- 13: Materialschwächung mit keilförmiger Eindrehung
- 14: Umlaufende Schräge am Dorn 12
- 15: Innenliegende Schräge am Sicherungsring 2
- 16: Einschraubgewinde an Ventilelement 3
- 17: Ventilkolben
- 18: Anschlagbereich am Dorn 12
- 19: Anschlagfläche am Ventilkolben 17

## Patentansprüche

1. Armatur (1) oder Anschlussstutzen mit einem Gehäuse mit einem Ventilelement (3) zum Einstellen und/ oder Absperren eines Fluiddurchflusses, insbesondere für einen angeschlossenen Speicherbehälter, und mit einem Sicherungsring (2) gegen unbeabsichtigtes Herausdrehen oder Herausziehen des Ventilelementes (3), wobei das Gehäuse der Armatur (1) einen gestuften Montagekanal aufweist, der einen ersten Bereich größeren Durchmessers als das Ventilelement (3) aufweist und an diesen stufig anschließend einen zweiten Bereich kleineren Durchmessers aufweist, in den das Ventilelement (3) mit einem Einschraubgewinde (16) einschraubbar oder mit dem Schaft eines Ventilkolbens (17) einschiebbar ist, und wobei der Sicherungsring (2) in einer innenliegenden Nut (9) des in Durchmesser größeren Bereichs des Montagekanals in einer Solllage positioniert ist, in der mindestens ein Teil des Sicherungsringes (2) soweit radial in den ersten Bereich des Montagekanals vorragt, dass eine Sperre für die Demontage des Ventilelementes (3) gebildet ist, **dadurch gekennzeichnet, dass** der Sicherungsring (2) mit dem Ventilelementes (3) ein einstückiges Bauteil (4) bildet und radial über das Ventilelement (3) vorragt, wobei die Verbindungsstelle zwischen Sicherungsring (2) und Ventilelement (3) durch eine Sollbruchstelle (6) gebildet ist, der Sicherungsring (2) eine Ausschlagfläche (7) aufweist, die angeordnet ist, um beim Einschieben oder Einschrauben des Ventilelementes (3) in den Montagekanal des Gehäuses der Armatur (1) an einem Gegenanschlag (8) des Montagekanals zur Anlage zu kommen und bei weiterem Einschieben oder Einschrauben des Ventilelementes (3) zum Abtrennen des Sicherungsringes (2) führt.

2. Armatur (1) nach Anspruch 1, **dadurch gekennzeichnet, dass** die innenliegende Nut (9) unmittelbar vor der Stufe des Montagekanals liegt, die durch den Übergang vom ersten Bereich zum zweiten Bereich des Montagekanals gebildet ist.

3. Armatur (1) nach Anspruch 1 oder 2, **dadurch gekennzeichnet, dass** der Sicherungsring (2) an einer Stelle einen Schlitz oder radial gerichteten Spalt (5) aufweist.

4. Armatur (1) nach einem der Ansprüche 1 bis 3, **dadurch gekennzeichnet, dass** der abgetrennte Sicherungsring (2) in der Solllage aufgeweitet ist.

5. Armatur (1) nach einem der Ansprüche 1 bis 4, **dadurch gekennzeichnet, dass** die Montagemündung oder der Eingang des Montagebereichs (11) für das Einbauteil (4) nach dem Einbau des Einbauteils (4) durch einen vorzugsweise eingeschraubten Verschlussstopfen (10) oder -bolzen geschlossen ist, der mit einem vorderseitigen Bestandteil, insbesondere einem Dorn (12), den separierten Sicherungsring (2) radial aufdehnt und in die Nut (9) drückt.

6. Armatur (1) nach einem der Ansprüche 1 bis 5, **dadurch gekennzeichnet, dass** die Sollbruchstelle (6) durch Materialschwächung (13) gebildet ist.

7. Armatur (1) nach Anspruch 6, **dadurch gekennzeichnet, dass** die Materialschwächung (13) durch eine Kontur mit keilförmigen Eindrehungen gebildet ist.

8. Armatur (1) nach einem der Ansprüche 1 bis 7, **dadurch gekennzeichnet, dass** in das einstückige Einbauteil (4) in einem Teilbereich des Sicherungsringes (2) eine Materialausnehmung eingearbeitet ist, die bei abgetrenntem Sicherungsring (2) vom Ventilelement (3) eine Öffnung bildet, um das Aufdehnen des Sicherungsringes (2) in die innenliegende Nut (9) des Gehäuses der Armatur (1) zu ermöglichen.

9. Armatur (1) nach einem der Ansprüche 5 bis 8, **dadurch gekennzeichnet, dass** das Aufweiten des Sicherungsringes (2) in eine innenliegende Nut (9) des Gehäuses der Armatur (1) oder Anschlussstutzens durch einen am vorderen Ende des Verschlussstopfens (10)oder -bolzen ausgebildeten, zum Sicherungsring (2) ausgerichteten Dorn (12) mit einer außen umlaufende angedrehten Schräge (14) erfolgt, die mit einer innenliegende Fläche oder Kante, insbesondere Schräge (15), des Sicherungsringes (2) so korrespondiert, dass der Dorn (12) den Sicherungsring (2) zentriert und eine radiale Kraft auf den Sicherungsring (2) erzeugt, um diesen in die innenliegende Nut (9) zu drücken.

10. Armatur (1) nach einem der Ansprüche 1 bis 9, **dadurch gekennzeichnet, dass** das als Ventilspindel ausgeführtes Ventilelement (3) ein Einschraubgewinde (16) aufweist und der Abschervorgang beim Einschrauben des Einbauteiles (4) eingeleitet und vollendet wird.

11. Armatur (1) nach einem der Ansprüche 1 bis 9, **dadurch gekennzeichnet, dass** das Ventilelement (3) des Einbauteils (4) als verschiebbarer Ventilkolben ausgeführt ist, wobei beim Einführen eines Verschlussstopfens (10) oder -bolzen in einem ersten Montageschritt das axial eingeführte Einbauteil (4) über die von Gehäuse der Armatur (1) und Sicherungsring (2) gebildete Anschlagfläche (8) hinaus in Axialrichtung weitergeschoben wird und dabei den Sicherungsring (2) vom Ventilkolben des Einbauteils (4) abschert und in einem zweiten Montageschritt beim weiteren Einführen des Verschlussstopfens (10) oder-bolzens den abgescherten Sicherungsring (2) in die vorgesehene Innennut (9) des Gehäuses der Armatur (1) aufdehnt.

12. Armatur (1) nach einem der Ansprüche 5 bis 10, **dadurch gekennzeichnet, dass** der separierte Sicherungsring (2) einen Innendurchmesser bildet, der auch nach dem Aufweiten durch den Dorn (12) des Verschlussstopfens (10) oder -bolzens kleiner ist als der Außendurchmesser des Ventilelements.
